# FASCICULE DE BREVET EUROPEEN

(11) **EP 2 941 360 B1**
(45) Date de publication et mention de la délivrance du brevet: **19.07.2017**
(21) Numéro de dépôt: 13818333.0
(22) Date de dépôt: 18.12.2013
(51) Int. Cl.: B60K 6/12

(54) **MODULE HYDRAULIQUE COMPORTANT DES ACCUMULATEURS HAUTE ET BASSE PRESSION, POUR UN VEHICULE HYBRIDE**
HYDRAULIKMODUL MIT HOCH- UND NIEDERDRUCKAKKUMULATOREN FÜR EIN HYBRIDFAHRZEUG
HYDRAULIC MODULE COMPRISING HIGH- AND LOW-PRESSURE ACCUMULATORS, FOR A HYBRID VEHICLE

(30) Priorité: 07.01.2013 FR 1350109
(43) Date de publication de la demande: 11.11.2015
(73) Titulaire: Technoboost, 75116 Paris (FR)
(72) Inventeur: FIORINI, Nelson, 95450 Sagy (FR); GATEAU, Pascal, 95620 Parmain (FR)
(74) Mandataire: Rosenberg, Muriel Sylvie
(86) Numéro de dépôt international: PCT/FR2013/053149
(87) Numéro de publication internationale: WO 2014/106704

(56) Documents cités:
- DE-A1-102008 061 757
- GB-A- 2 415 671
- US-A1- 2004 251 067
- US-A1- 2009 172 942

## Description

La présente invention concerne un module comportant des accumulateurs hydrauliques haute et basse pression pour un véhicule hybride, ainsi qu'un véhicule hybride comportant un tel module.

Certains véhicules hybrides comportent un moteur thermique qui peut entraîner une pompe hydraulique afin de recharger des accumulateurs de fluide sous pression pour stocker une énergie, et des moteurs hydrauliques entraînant les roues motrices du véhicule, qui sont alimentés par ces accumulateurs. Ces véhicules comportent aussi une pompe hydraulique reliée aux roues motrices, afin de récupérer une énergie cinétique du véhicule lors des freinages en rechargeant les accumulateurs.

Les accumulateurs hydrauliques peuvent comporter en particulier un accumulateur haute pression recevant la pression des pompes hydrauliques afin d'alimenter les moteurs, et un accumulateur basse pression recevant en retour le fluide qui sort de ces moteurs.

Ces véhicules hybrides permettent d'optimiser le fonctionnement du moteur thermique, afin de réduire sa consommation ainsi que les émissions de gaz polluants. Le stockage d'énergie hydraulique permet aussi de rouler en mode hydraulique seul appelé « ZEV », sans émission de gaz polluant, le moteur thermique restant à l'arrêt.

Un type de motorisation hydraulique connu, présenté notamment par le document FR-A1-2972682, comporte un ensemble rigide comprenant les accumulateurs de pression, le bloc hydraulique de commande et les moteurs hydrauliques de traction, qui sont fixés ensemble.

Le document DE 10 2008 061757 décrit un véhicule selon le préambule de la revendication 1.

Une disposition particulière présentée comporte des moteurs de traction disposés sur l'essieu avant, qui sont fixés au bloc hydraulique de commande et à un premier réservoir disposés longitudinalement sous le véhicule, le deuxième réservoir étant fixé transversalement à l'arrière de ce premier réservoir.

Un problème qui se pose avec cette disposition particulière, est que l'ensemble rigide ne peut pas s'adapter facilement sur un véhicule hybride comprenant un moteur thermique à l'avant et un réservoir de carburant disposé sous les sièges des passagers arrière, qui reprend une plateforme d'un véhicule conventionnel comportant uniquement un moteur thermique.

En particulier la partie avant comportant les blocs hydrauliques de commande et le premier réservoir, disposée longitudinalement sous le véhicule, impose des modifications importantes de la plate-forme de ce véhicule, et prend une partie de la place destinée au réservoir d'essence qui voit sa capacité fortement réduite.

De plus cet ensemble rigide qui s'étend sur une grande partie de la longueur du véhicule, pose des problèmes importants pour assurer la sécurité des passagers, notamment en cas de choc frontal ou latéral à grande vitesse sur le véhicule.

La présente invention a notamment pour but d'éviter ces inconvénients de la technique antérieure.

Elle propose à cet effet un véhicule hybride hydraulique comportant un module hydraulique conforme à la revendication 1.

Un avantage du véhicule hybride hydraulique selon l'invention est que le module hydraulique est disposée à plat sous le coffre arrière du véhicule, en conservant la plus grande partie du plancher d'un véhicule conventionnel en avant du train arrière, comportant le réservoir de carburant qui n'est pas modifié, afin d'obtenir une standardisation importante pour les différents types de véhicules réalisés sur une même plate-forme.

Le véhicule selon l'invention peut de plus comporter une ou plusieurs des caractéristiques suivantes, qui peuvent être combinées entre elles.

Avantageusement, le corps du module hydraulique comporte des logements cylindriques, formant un support recevant les accumulateurs de pression.

Avantageusement, le module hydraulique comporte des réservoirs cylindriques disposés transversalement.

En particulier, le module hydraulique peut comporter un accumulateur haute pression et un accumulateur basse pression juxtaposés l'un derrière l'autre.

Avantageusement, le module hydraulique comporte des couvercles disposés sur les côtés latéraux, qui recouvrent les extrémités des accumulateurs hydrauliques.

Avantageusement, chaque support comporte des moyens élastiques de fixation au plancher du véhicule.

Avantageusement, le module hydraulique comporte un bloc hydraulique de commande intégré dans ce module.

L'invention a aussi pour objet un véhicule hybride hydraulique selon les revendications 8 et 9.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma présentant en vue de dessus un véhicule hybride comportant différents éléments hydrauliques disposés de manière connue ;
- la figure 2 est une vue en perspective d'un module hydraulique selon l'invention ; et
- la figure 3 est une vue de dessous de la partie arrière d'un véhicule hybride comportant ce module.

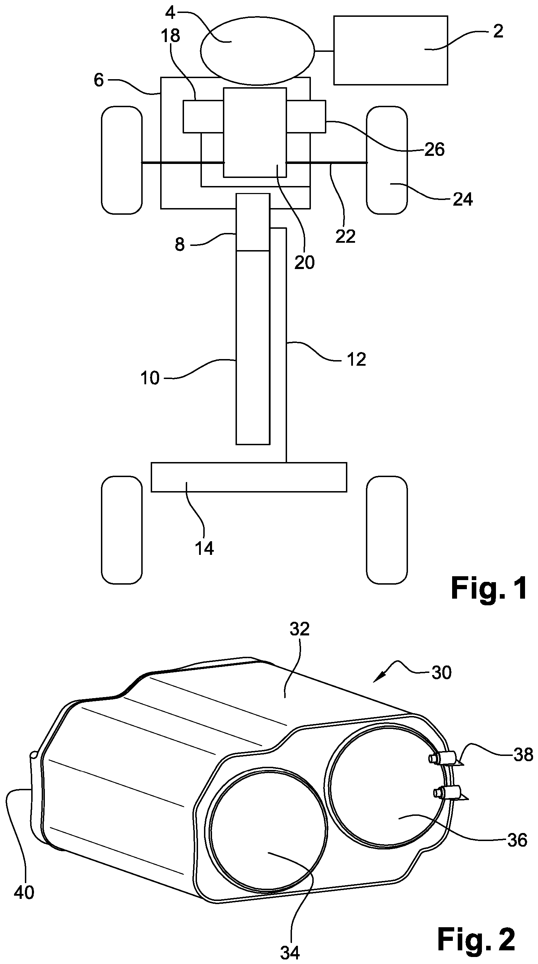

La figure 1 présente un véhicule hybride comportant un moteur thermique 2 relié directement à une première pompe hydraulique 4, qui reçoit du fluide d'alimentation par un circuit hydraulique basse pression 16, pour le renvoyer à une pression élevée dans un circuit hydraulique haute pression 6.

Les circuits basse pression 16 et haute pression 6 sont raccordés à un bloc hydraulique de commande 8, qui commande un moteur hydraulique 18 et une deuxième pompe hydraulique 26.

Le bloc hydraulique de commande 8 est fixé à l'avant d'un accumulateur haute pression allongé 10, disposé longitudinalement sous le plancher du véhicule. Un accumulateur basse pression 14 allongé suivant une direction latérale, et détaché du réservoir haute pression, est fixé sous le véhicule en arrière de ce réservoir haute pression.

Le bloc hydraulique de commande 8 est directement raccordé par une canalisation interne haute pression à l'accumulateur haute pression 10, et par une canalisation externe basse pression 12 à l'accumulateur basse pression 14.

Une transmission 20 comprenant plusieurs rapports de vitesse, supporte d'un côté le moteur hydraulique 18 afin de transmettre une puissance mécanique aux roues avant motrices 24 par des arbres de roue 22, en prélevant une énergie dans l'accumulateur haute pression 10, et de l'autre côté la deuxième pompe hydraulique 26 afin de recevoir une puissance mécanique venant de ces roues motrices, pour recharger les accumulateurs.

On obtient ainsi une disposition des deux accumulateurs de pression 10, 14, qui est relativement encombrante, et qui ne permet pas de réaliser une standardisation élevée entre différents types de véhicules hybrides ou pas, utilisant une même plate-forme.

De plus chaque accumulateur 10, 14 étant fixé de manière indépendante sous le véhicule, nécessite des fixations propres qui sont élastiques afin de filtrer des vibrations. Il faut alors prévoir un certain nombre de canalisations hydrauliques pour raccorder les différents composants hydrauliques, nécessitant des brides de fixation et des embouts de raccordement qui entraînent des risques de vibrations, de fuite et de rupture par un travail en fatigue.

De plus l'assemblage et le raccordement de ces différents éléments sous le plancher du véhicule, est une opération relativement longue et complexe.

La figure 2 présente un module hydraulique 30, comprenant un corps principal 32 de forme globalement parallélépipédique, comportant en vue de dessus une forme rectangulaire allongée suivant une direction transversale, et une hauteur réduite par rapport aux dimensions de cette forme rectangulaire.

Le corps principal 32 comporte perpendiculairement à un axe transversal, une section constante comprenant deux logements formant des passages cylindriques 34, 36 disposés transversalement et juxtaposés l'un derrière l'autre, qui remplissent une grande partie du volume de ce corps. Le corps 32 est avantageusement réalisé dans un matériau léger, comme un alliage d'aluminium ou une matière plastique, qui peut être par exemple moulé, ou extrudé pour former un profilé constant.

Chaque passage cylindrique 34, 36 est prévu pour recevoir un accumulateur haute ou basse pression, comprenant une partie cylindrique ajustée dans son passage, et deux couvercles bombés fermant les extrémités pour résister à la pression.

Un bloc hydraulique de commande est intégré dans un des côtés du module 30, de manière à être relié directement aux accumulateurs par des canalisations courtes, comprenant un système de raccordement très simplifié apportant une meilleure fiabilité, une réduction des masses et des coûts.

L'accumulateur hydraulique arrière comporte des raccords hydrauliques extérieurs 38 fixés à l'arrière du corps principal 32, et raccordés directement sur cet accumulateur, ces raccords étant reliés à des canalisations partant vers l'avant du véhicule. Ce positionnement des raccords extérieurs 38 qui ne se trouvent pas sur un côté latéral du module 30, permet de réduire la largeur de ce module.

Chaque côté latérale du module hydraulique 30 est fermé par un capot de protection 40, qui recouvre les extrémités des accumulateurs hydrauliques, le bloc hydraulique ainsi que des raccords internes, afin de les protéger, notamment des projections d'eau. On notera que le capot prévu vers l'avant de la figure n'est pas représenté.

Le module hydraulique 30 comporte aussi des moyens de fixation permettant de le fixer directement sous le plancher du véhicule, qui ne sont pas représentés sur cette figure.

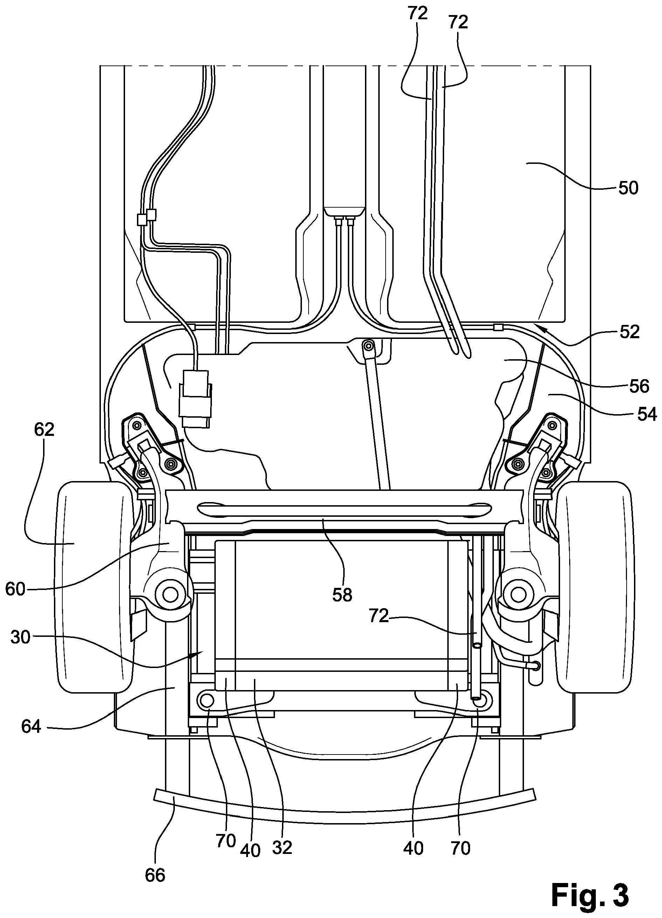

La figure 3 présente la partie arrière du véhicule comportant un plancher sensiblement plat 50, qui se termine vers l'arrière par un rebord vertical 52 le séparant d'une deuxième partie haute 54 se trouvant à une hauteur supérieure.

Un réservoir de carburant 56 remplit l'espace se trouvant en dessous de la partie haute du plancher 54, qui est compris longitudinalement entre le rebord vertical 52, et une traverse 58 du train arrière supportant les roues arrière 62.

Le train arrière appelé train en « H », comporte la traverse 58 comprenant chacune de ses extrémités fixée de manière rigide à la partie centrale d'un bras de suspension longitudinal 60, l'extrémité avant de ces bras étant reliée à la caisse du véhicule par une articulation, et l'extrémité arrière recevant une roue 62. Ce type de train arrière est simple à fabriquer, et dégage un espace important à l'arrière de la traverse 58, entre les bras de suspension 60.

Le réservoir 56 ainsi que le train arrière sont similaires à ceux équipant des véhicules conventionnels comportant uniquement un moteur thermique.

La caisse du véhicule comporte deux longerons longitudinaux 64 placés de chaque côté sous le coffre, au-dessus des bras de suspension 60. Une traverse 66 fixée à l'extrémité arrière des longerons 64, supportant un pare-chocs arrière qui n'est pas représenté, est décalée vers l'arrière par rapport à la caisse du véhicule afin de constituer un volume libre permettant une déformation en cas de choc arrière

Le module hydraulique 30 est fixé à plat sous le coffre du véhicule, par des supports 70 disposés sur son pourtour, en particulier à chaque angle de ce module, formant un plan horizontal comprenant chacun un perçage recevant une fixation élastique qui permet de filtrer les vibrations. Le montage du module hydraulique 30 sous la caisse du véhicule, est facile et rapide par une approche verticale de ce module sous le coffre qui engage les fixations élastique dans les perçages, puis par un serrage de ces fixations.

Ensuite des canalisations haute et basse pression 72 venant de l'avant du véhicule, fixées sous le plancher, sont raccordées au module hydraulique 30.

On obtient grâce au module hydraulique 30 regroupant les deux accumulateurs et le bloc hydraulique, un nombre limité de fixations élastique pour maintenir ces éléments sous le véhicule, ce qui assure une bonne prestation acoustique, simplifie le montage et réduit les coûts.

De plus les deux accumulateurs peuvent être très rapprochés dans le module hydraulique 30, car il n'y a pas à prévoir un espace entre eux qui est nécessaire quand ces deux éléments sont fixés indépendamment l'un de l'autre par leurs propres fixations élastiques, pouvant permettre des mouvements relatifs.

Le module hydraulique 30 comprenant une forme globalement parallélépipédique, remplit sensiblement tout l'espace compris en dessous du plancher du coffre, longitudinalement entre la traverse 58 du train arrière et la partie arrière de la caisse du véhicule, et latéralement entre les deux bras de suspension 60. De cette manière, avec une surélévation du plancher du coffre qui modifie peu la plate-forme des véhicules conventionnels, on a une optimisation des volumes sous la caisse du véhicule, qui sont bien remplis.

En variante, le module hydraulique 30 peut comporter plus de deux accumulateurs hydrauliques haute ou basse pression indépendants, reliés entre eux directement à l'intérieur de ce module par des canalisations internes.

Le module hydraulique 30 permet de réduire la masse des véhicules hybrides hydrauliques, et de simplifier la conception ainsi que l'assemblage sur les chaînes de montage du constructeur. Il facilite aussi les réparations en après-vente, en permettant un échange rapide de l'ensemble.

## Revendications

1. Véhicule hybride hydraulique comportant un module hydraulique monté sur ce véhicule hybride hydraulique, le module hydraulique formant un ensemble rigide et compact comportant un corps (32) recevant les accumulateurs destinés à alimenter des moteurs de traction du véhicule, comprenant une forme globalement parallélépipédique, et disposant de moyens de fixation (70) fixés sous un plancher à l'arrière du véhicule, **caractérisé en ce que** le corps (32) reçoit des accumulateurs haute et basse pression et **en ce qu'**il comporte des supports (70) disposés sur son pourtour, formant des plans sensiblement horizontaux, fixés sous le plancher du véhicule.

2. Véhicule hybride hydraulique selon la revendication 1, **caractérisé en ce que** le corps (32) comporte des logements cylindriques (34, 36) formant un support recevant les accumulateurs de pression.

3. Véhicule hybride hydraulique selon la revendication 1 ou 2, **caractérisé en ce qu'**il comporte des réservoirs cylindriques disposés transversalement.

4. Véhicule hybride hydraulique selon la revendication 3, **caractérisé en ce qu'**il comporte un accumulateur haute pression et un accumulateur basse pression juxtaposés l'un derrière l'autre.

5. Véhicule hybride hydraulique selon la revendication 3 ou 4, **caractérisé en ce qu'**il comporte des couvercles (40) disposés sur les côtés latéraux, qui recouvrent les extrémités des accumulateurs hydrauliques.

6. Véhicule hybride hydraulique selon l'une quelconque des revendications précédentes, **caractérisé en ce que** chaque support (70) comporte des moyens élastiques de fixation au plancher du véhicule.

7. Véhicule hybride hydraulique selon l'une quelconque des revendications précédentes, **caractérisé en ce qu'**il comporte un bloc hydraulique de commande intégré dans le module (30).

8. Véhicule hybride hydraulique selon l'une des revendications précédentes comportant des accumulateurs haute et basse pression raccordés à des moteurs et des pompes hydrauliques, **caractérisé en ce que** ces accumulateurs sont intégrés dans le module hydraulique.

9. Véhicule hybride selon la revendication 8, **caractérisé en ce qu'**il comporte un train arrière en « H » comprenant une traverse (58) fixée à ses extrémités à des bras de suspension longitudinaux (60), le module hydraulique (30) étant fixé à plat sous le coffre du véhicule, juste en arrière de la traverse (58).

## Patentansprüche

1. Hydraulisches Hybridfahrzeug, ein Hydraulikmodul umfassend, das in diesem hydraulischen Hybridfahrzeug montiert ist, wobei das Hydraulikmodul eine starre und kompakte Einheit bildet, die ein Gehäuse (32) umfasst, das Speicher aufnimmt, die dazu bestimmt sind, Traktionsmotoren des Fahrzeugs zu versorgen, eine im Allgemeinen quaderförmige Form aufweisend, und über Befestigungsmittel (70) verfügend, die unter einem Boden hinten am Fahrzeug befestigt sind, **dadurch gekennzeichnet, dass** das Gehäuse (32) Hoch- und Niederdruckspeicher aufnimmt, und dadurch, dass es Träger (70) umfasst, die an seinem Umfang angeordnet sind, in etwa horizontale Ebenen bildend, unter dem Boden des Fahrzeugs befestigt sind.

2. Hydraulisches Hybridfahrzeug nach Anspruch 1, **dadurch gekennzeichnet, dass** das Gehäuse (32) zylindrische Aufnahmen (34, 36) umfasst, die einen Träger bilden, der die Druckspeicher aufnimmt.

3. Hydraulisches Hybridfahrzeug nach Anspruch 1 oder 2, **dadurch gekennzeichnet, dass** es zylindrische Tanks umfasst, die querlaufend angeordnet sind.

4. Hydraulisches Hybridfahrzeug nach Anspruch 3, **dadurch gekennzeichnet, dass** es einen Hochdruckspeicher und einen Niederdruckspeicher umfasst, die hintereinander angeordnet sind.

5. Hydraulisches Hybridfahrzeug nach Anspruch 3 oder 4, **dadurch gekennzeichnet, dass** es Deckel (40) umfasst, die an den lateralen Seiten angeordnet sind, die die Enden der hydraulischen Speicher abdecken.

6. Hydraulisches Hybridfahrzeug nach irgendeinem der vorhergehenden Ansprüche, **dadurch gekennzeichnet, dass** jeder Träger (70) elastische Mittel zur Befestigung am Boden des Fahrzeugs umfasst.

7. Hydraulisches Hybridfahrzeug nach irgendeinem der vorhergehenden Ansprüche, **dadurch gekennzeichnet, dass** es einen im Modul (30) integrierten Steuer-Hydraulikblock umfasst.

8. Hydraulisches Hybridfahrzeug nach irgendeinem der vorhergehenden Ansprüche, Hochdruck- und Niederdruckspeicher umfassend, die mit Motoren und Hydraulikpumpen verbunden sind, **dadurch gekennzeichnet, dass** diese Speicher im Hydraulikmodul integriert sind.

9. Hybridfahrzeug nach Anspruch 8, **dadurch gekennzeichnet, dass** es eine Hinterachse in "H" Form umfasst, einen Querträger (58) umfassend, der an seinen Enden mit den Längslenkern (60) verbunden ist, wobei das Hydraulikmodul (30) flachliegend unter dem Kofferraum des Fahrzeugs, unmittelbar hinter dem Querträger (58) befestigt ist.

## Claims

1. Hydraulic hybrid vehicle including a hydraulic module mounted on this hydraulic hybrid vehicle, the hydraulic module forming a rigid and compact assembly including a body (32) receiving the accumulators destined to supply the vehicle traction motors, including a globally parallelepiped form, and disposing of a fixation means (70) fixed under the floor at the rear of the vehicle, **characterised in that** the body (32) receives both high and low pressure accumulators and that it includes supports (70) fitted to its circumference, forming an almost horizontal plane, fixed underneath the floor of the vehicle.

2. Hydraulic hybrid vehicle according to claim 1, **characterised in that** the body (32) includes cylindrical housings (34, 36) forming a support receiving the pressure accumulators.

3. Hydraulic hybrid vehicle according to claim 1 or 2, **characterised in that** it includes cylindrical reservoirs laid transversally.

4. Hydraulic hybrid vehicle according to claim 3, **characterised in that** it includes a high pressure accumulator and a low pressure accumulator juxtaposed one behind the other.

5. Hydraulic hybrid vehicle according to claim 3 or 4, **characterised in that** in includes covers (40) fitted on the lateral sides, which cover the ends of the hydraulic accumulators.

6. Hydraulic hybrid vehicle according to one of the precedent claims, **characterised in that** each support (70) includes elastic means for fixing to the floor of the vehicle.

7. Hydraulic hybrid vehicle according to one of the precedent claims, **characterised in that** it includes a hydraulic control unit integrated into the module (30).

8. Hydraulic hybrid vehicle according to one of the precedent claims including high and low pressure accumulators connected to the motors and to the hydraulic pumps, **characterised in that** these accumulators are integrated into the hydraulic module.

9. Hydraulic hybrid vehicle according to claim 8, **characterised in that** it includes a rear drive train in "H" form, including a cross-piece (58) fixed at its ends to the longitudinal suspension arm (60), the hydraulic module (30) being fixed flat underneath the boot of the vehicle, just behind the cross-piece (58).
